# EUROPÄISCHE PATENTSCHRIFT

(11) **EP 2 379 887 B1**
(45) Veröffentlichungstag und Bekanntmachung des Hinweises auf die Patenterteilung: **10.04.2013**
(21) Anmeldenummer: 09774679.6
(22) Anmeldetag: 15.12.2009
(51) Int. Cl.: F04B 39/00, F04B 45/04, F04B 45/047, B60T 17/02, F04B 9/04

(54) **MOTOR-PUMPENAGGREGAT**
MOTOR-PUMP ASSEMBLY
GROUPE MOTOPOMPE

(30) Priorität: 19.12.2008 DE 102008064151; 10.12.2009 DE 102009054502
(43) Veröffentlichungstag der Anmeldung: 26.10.2011
(73) Patentinhaber: Continental Teves AG & Co. oHG, 60488 Frankfurt (DE)
(72) Erfinder: KREBS, Stephan, 65760 Eschborn (DE); RÜFFER, Manfred, 65843 Sulzbach (DE); BACHER, Jens, 60487 Frankfurt am Main (DE); KREH, Heinrich, 61197 Florstadt (DE); MILISIC, Lazar, 65779 Kelkheim. (DE); SEITZ, Karlheinz, 64653 Lorsch (DE); KÖNIG, Harald, 61239 Ober-Mörlen (DE); KOLLERS, Michael, 65760 Eschborn (DE); GONZALEZ, Jose, 32549 Bad Oeynhausen (DE); JÜRGING, Michael, 65779 Kelkheim (DE); NIEPENBERG, Marcel, 64521 Groß-Gerau (DE)
(86) Internationale Anmeldenummer: PCT/EP2009/067202
(87) Internationale Veröffentlichungsnummer: WO 2010/069963

(56) Entgegenhaltungen:
- WO-A-2009/034044
- DE-A1-102007 020 538
- US-A- 4 730 999
- US-A1- 2003 103 843

## Beschreibung

Die Erfindung betrifft ein Motor-Pumpenaggregat gemäß dem Oberbegriff des Patentanspruchs 1.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Eine gattungsgemäßes Motor-Pumpenaggregat ist beispielsweise aus der DE 10 2007 005 223 A1 oder aus der DE 10 2007020538 A1 bekannt.

Es bestehen stets Bestrebungen, die Herstellungskosten sowie den Montageaufwand zu reduzieren. Daher ist es Aufgabe der vorliegenden Erfindung, ein geräuscharmes, kostenreduziertes Motor-Pumpenaggregat bereitzustellen, welches im Vergleich zu dem bekannten, gattungsgemäßen Aggregat einen reduzierten Montageaufwand erfordert. Ferner soll die Bauteilanzahl reduziert werden.

Die Aufgabe wird erfindungsgemäß dadurch gelöst, dass die Exzenter mit den Wuchtgewichten als Sinterbauteile vorgesehen sind. Hierdurch kann die Montage der Lufteinlasseinheit wesentlich vereinfacht werden und die Bauteilanzahl verringert sich.

Weitere Merkmale, Vorteile und Anwendungsmöglichkeiten der Erfindung gehen aus der nachfolgenden Beschreibung von einem Ausführungsbeispiel sowie anhand der Zeichnung hervor.

Es zeigt:
- Figur 1: ein erfindungsgemäßes Motor-Pumpenaggregat in räumlicher Darstellung;
- Figur 2: das Motor-Pumpenaggregat gemäß Fig.1 im Längsschnitt;
- Figur 3: eine Arbeitsmembran des Motor-Pumpenaggregates gemäß Fig. 1 und 2 mit Kurbelantrieb;
- Figur 4: ein Exzenter des Kurbelantriebs gemäß Fig. 3 mit angeformtem Wuchtgewicht und
- Figur 5: eine Pleuelstange des Kurbelantriebs gemäß Fig. 3.

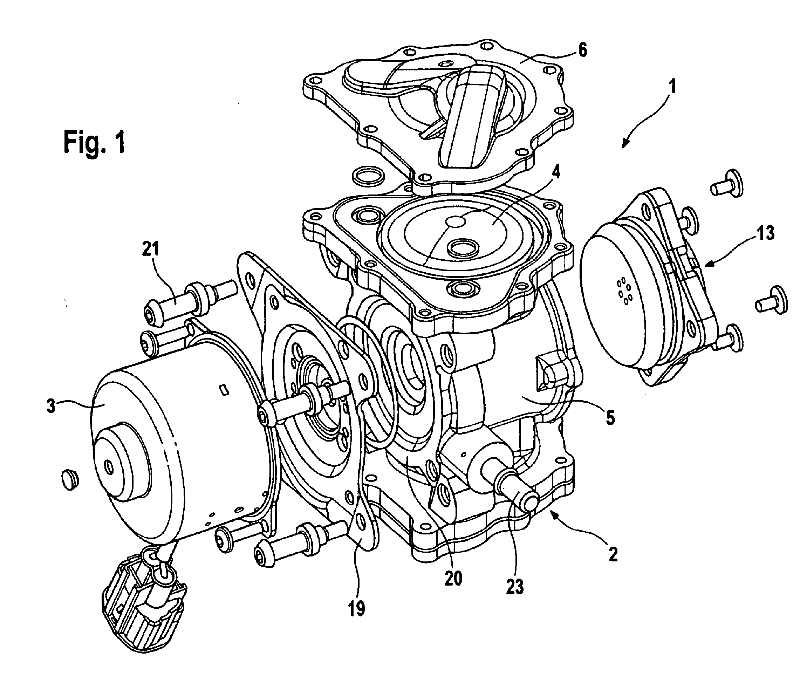

Fig. 1 zeigt ein erfindungsgemäßes Motor-Pumpenaggregat 1 in einer Explosionsdarstellung, welches eine Pumpe 2 mit einem Pumpengehäuse 5 und einen die Pumpe 2 antreibenden elektrischen Motor 3 umfasst, wobei der Motor 3 beispielsweise als Gleichstrommotor ausgebildet sein kann.

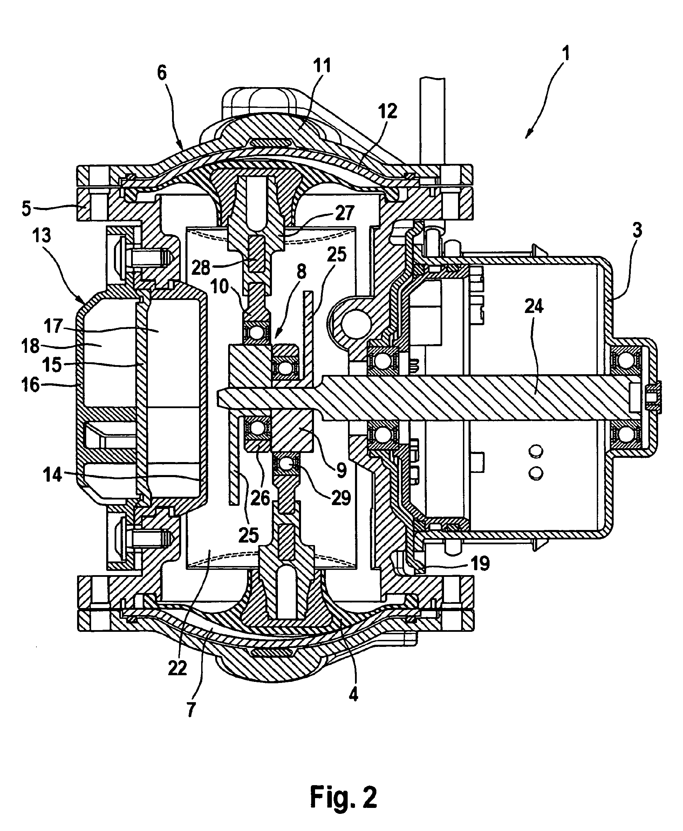

Die Pumpe 2, wie insbesondere aus der Schnittdarstellung gemäß Fig. 2 ersichtlich ist, ist als Doppelmembranpumpe mit zwei gegenüberliegenden Arbeitsmembranen 4 vorgesehen, welche jeweils zwischen dem Pumpengehäuse 5 und einem Arbeitsraumdeckel 6 eingespannt ist und dadurch einen Arbeitsraum 7 begrenzt. Die Arbeitsmembrane 4 sind mittels eines Kurbelantriebs 8 gegensinnig bewegbar, welcher je Arbeitsmembran 4 einen Exzenter 9 und eine Pleuelstange 10 umfasst. Der Arbeitsraumdeckel 6 weist einen Oberdeckel 11 sowie einen Unterdeckel 12 auf, die luftdicht miteinander verschweißt, vernietet bzw. verschraubt sind. Zur Kostenreduzierung ist der Oberdeckel 11 aus Kunststoff vorgesehen und Unterdeckel 12 ist als Stanzteil oder Sinterteil ausgebildet. Möglich ist auch eine kostengünstige Herstellung mittels Aluminiumdruckguss.

In den Arbeitsraumdeckeln 6 sind nicht gezeigte Einlass- und Auslassventile vorgesehen. Vom dem Auslassventil wird die ausgestoßene Luft über einen Auslasskanal im Arbeitsraumdeckel 6 zu einem Auslasskanal im Pumpengehäuse 5 geleitet, die luftdicht mittels eines Dichtelements verbunden sind. Die beiden Auslasskanäle im Pumpengehäuse 5 münden in einen Innenraum 22 des Pumpengehäuses 5, dem so genannten Kurbelraum, welcher den Kurbelantrieb 8 umgibt.

Eine in dem Pumpengehäuse 5 vorgesehene Luftauslasseinheit 13 bestehend aus einem Filtergehäuse 14, einem Zwischenboden 15 und einem Luftauslassdeckel 16 ermöglicht ein geräuscharmes Ausblasen der Luft aus dem Innenraum 22, welcher so als Schalldämpfungsraum dient. Weiter umfasst die Luftauslasseinheit 13 ein nicht dargestelltes Rückschlagventil mit einem ein- oder mehrteiligen Ventilkörper, das ein Zurückströmen von bereits ausgestoßener Luft sowie das Eindringen flüssiger oder gasförmiger Substanzen in den Innenraum 22 verhindert.

Zusätzlich wird der Luftschall beim Austreten der Luft aus dem Innenraum 22 dadurch vermindert, dass die Luft beim Durchströmen der Luftauslasseinheit 13 mehrmals umgelenkt wird und dabei zwei Filterelemente 17,18 durchströmt, bevor sie aus der Luftauslasseinheit 13 austritt.

Das Pumpengehäuse 5 ist aus Kunststoff vorgesehen, wodurch eine kostengünstige Herstellung ermöglicht wird. Wie den Fig. 1 und 2 entnommen werden kann, ist zwischen dem Motor 3 und dem Pumpengehäuse 5 ein Motorblech 19 angeordnet, welches an einer Motorflanschseite 20 des Pumpengehäuses 5 befestigt ist und vom Motor 3 abgegebene EMV-Strahlen abhält.

Die Befestigung des Motors 3 und des Motorbleches 19 am Pumpengehäuse 5 erfolgt mittels Schraubelementen 21, welche direkt ins Pumpengehäuse 5 eingeschraubt werden.

Ferner ist am Pumpegehäuse 5 ein in Fig. 1 gezeigter Anschluss 23 vorgesehen, über beispielsweise ein angeschlossener Bremskraftverstärker evakuiert wird.

Fig. 2 ist weiter zu entnehmen, dass eine Motorwelle 24 gleichzeitig als Exzenterwelle dient, welche den Kurbelantrieb 8 mit den Exzentern 9 und den Pleuelstangen 10 trägt.

Es ist jedoch auch eine separate Ausführung von Motorwelle und Exzenterwelle möglich.

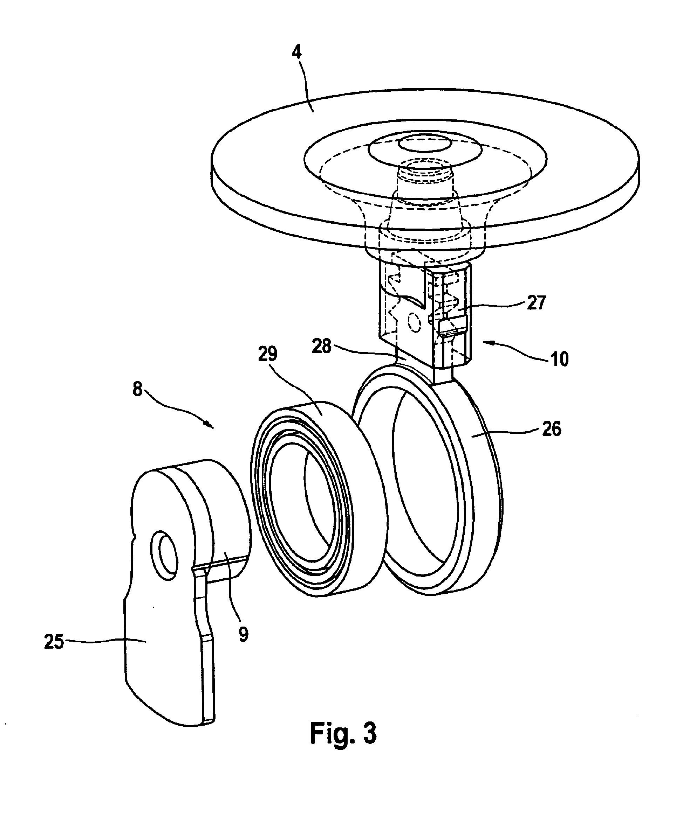

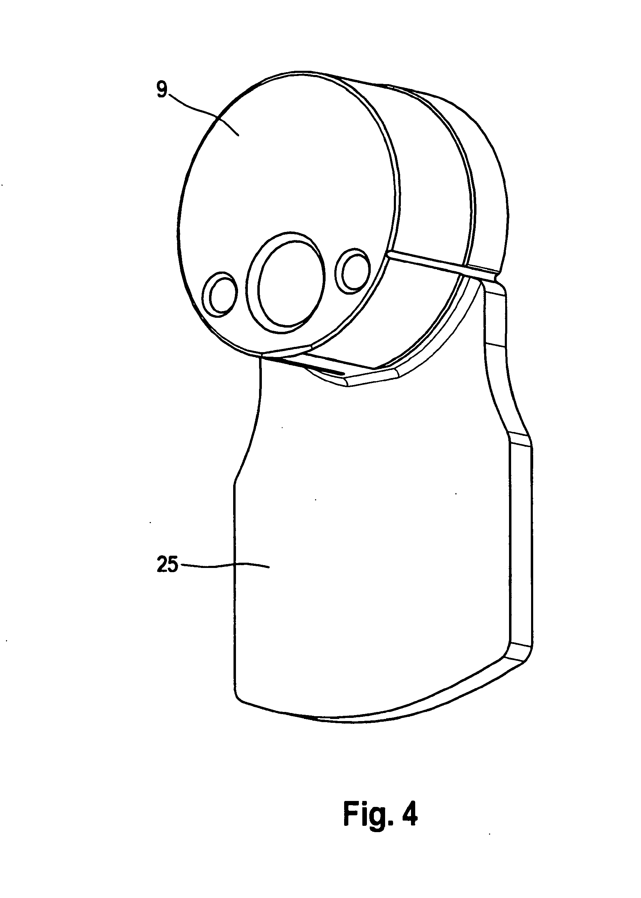

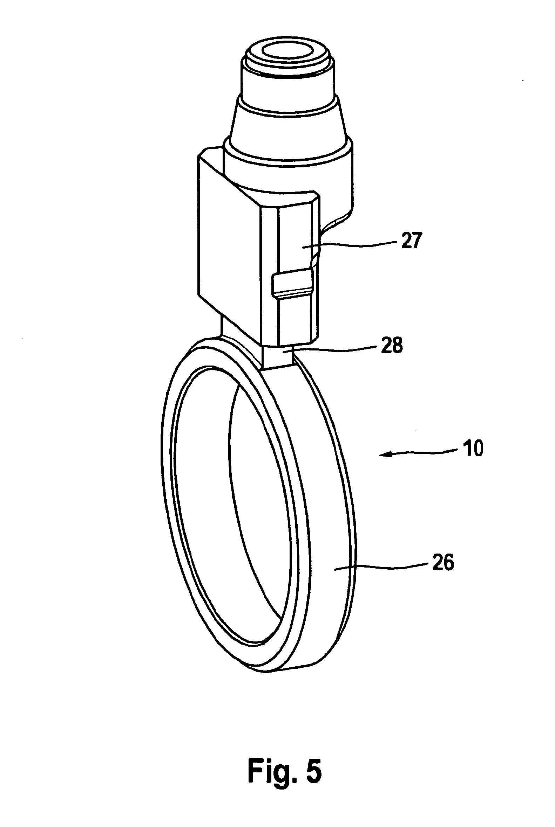

Fig. 3 zeigt in räumlicher Explosions-Darstellung eine Arbeitsmembran 4 mit einem Kurbelantrieb 8 umfassend Exzenter 9 und Pleuelstange 10, wobei den Fig. 4 und 5 vergrößerte Ansichten des Exzenters 9 und der Pleuelstange 10 zu entnehmen sind.

Wie aus Fig. 4 deutlich ersichtlich ist, weist der Exzenter 9 zur Schwingungsoptimierung ein einteilig angeformtes Wuchtgewicht 25 auf, wobei der Exzenter 9 und das Wuchtgewicht 25 als Sinterbauteil hergestellt sind. Diese Ausgestaltung des Exzenters 9 bedingt zum einen eine kostengünstige Herstellung und eine vereinfachte Montage, da die separate Montage des Wuchtgewichtes 25 an dem Exzenter 9 durch Verschrauben, Verschweißen etc. entfallen kann, und zum anderen eine weitere Bauteilreduzierung.

Zur weiteren Kostenoptimierung ist ein Pleuelauge 26 der Pleuelstange 10 als Sinterbauteil hergestellt und ein Pleuelschaft 27 ist aus Kunststoff vorgesehen. Die Befestigung des Pleuelschaftes 27 an dem Pleuelauge 26 erfolgt durch Umspritzen eines an dem Pleuelauge 26 angeformten Ansatzes 28.

Die Arbeitsmembran 4 kann auf dem Pleuelschaft 27 in einfacher Weise durch Reibschweißen befestigt werden. Ein Kugellager 29 wird in das Pleuelauge 26 eingepresst.

Eine nicht gezeigte Ausführungsform der Erfindung sieht vor, dass die Pleuelstange 10 einteilig als Sinterbauteil hergestellt ist.

### Bezugszeichenliste

1 Motor-Pumpenaggregat
2 Pumpe
3 Motor
4 Arbeitsmembran
5 Pumpengehäuse
6 Arbeitsraumdeckel
7 Arbeitsraum
8 Kurbelantrieb
9 Exzenter
10 Pleuelstange
11 Oberdeckel
12 Unterdeckel
13 Luftauslasseinheit
14 Filtergehäuse
15 Zwischenboden
16 Luftauslassdeckel
17 Filterelement
18 Filterelement
19 Motorblech
20 Motorflanschseite
21 Schraubelement
22 Innenraum
23 Anschluss
24 Motorwelle
25 Wuchtgewicht
26 Pleuelauge
27 Pleuelschaft
28 Ansatz
29 Kugellager

## Patentansprüche

1. Motor-Pumpenaggregat (1), insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Pumpe (2) und einen die Pumpe (2) antreibenden elektrischen Motor (3), wobei die Pumpe (2) als Doppelmembranpumpe mit zwei gegenüberliegenden Arbeitsmembranen (4) vorgesehen ist, welche jeweils zwischen einem Pumpengehäuse (5) und einem Arbeitsraumdeckel (6) eingespannt ist und dadurch einen Arbeitsraum (7) begrenzt und welche mittels eines, Exzenter (9) und Pleuelstangen (10) aufweisenden Kurbelantriebs (8) bewegbar sind, wobei dem Arbeitsraum (7) jeweils ein Einlasskanal mit Einlassventil und ein Auslasskanal mit Auslassventil zugeordnet ist, wobei die Auslasskanäle in den Arbeitsraumdeckeln (6) und im Pumpengehäuse (5) derart angeordnet vorgesehen sind, dass aus den Arbeitsräumen (7) verdrängte Luft in einen, den Kurbelantrieb umgebenden Innenraum (22) des Pumpengehäuses (5) geleitet wird, und dass eine Luftauslasseinheit (13) vorgesehen ist, welche ein geräuscharmes Ausblasen der Luft aus dem Innenraum (22) durch Umlenken der Luft ermöglicht, **dadurch gekennzeichnet, dass** die Exzenter (9) jeweils ein Wuchtgewicht (25) aufweisen, welches einteilig an den Exzenter (9) angeformt vorgesehen ist.

2. Motor-Pumpenaggregat nach Anspruch 1, **dadurch gekennzeichnet, dass** die Exzenter (9) mit den Wuchtgewichten (25) als Sinterbauteile vorgesehen sind.

3. Motor-Pumpenaggregat nach Anspruch 1 oder 2, **dadurch gekennzeichnet, dass** die Pleuelstangen (10) als Sinterbauteile vorgesehen sind.

4. Motor-Pumpenaggregat nach Anspruch 1 oder 2, **dadurch gekennzeichnet, dass** ein Pleuelauge (26) der Pleuelstangen (10) als Sinterbauteil und ein Pleuelschaft (27) aus Kunststoff vorgesehen sind.

5. Motor-Pumpenaggregat nach Anspruch 4, **dadurch gekennzeichnet, dass** die Befestigung des Pleuelschaftes (27) an dem Pleuelauge (26) durch Umspritzen eines Ansatzes (28) des Pleuelauges (26) vorgesehen ist.

6. Motor-Pumpenaggregat nach einem der vorangegangenen Ansprüche, **dadurch gekennzeichnet, dass** die Arbeitsmembrane (4) durch Reibschweißen an den Pleuelstangen (10) befestigt sind.

## Claims

1. Motor-pump assembly (1), in particular for providing pressure for a brake actuating device of a motor vehicle brake system having a pneumatic brake booster, in particular a vacuum brake booster, comprising a pump (2) and an electric motor (3) which drives the pump (2), wherein the pump (2) is provided as a double diaphragm pump with two working diaphragms (4) which are located opposite one another and which are each clamped in between a pump housing (5) and a working space cover (6), and as a result bound a working space (7) and which can be moved by means of a crank drive (8) having eccentrics (9) and connecting rods (10), wherein the working space (7) is respectively assigned an inlet duct with an inlet valve and an outlet duct with an outlet valve, wherein the outlet ducts are provided arranged in the working space covers (6) and in the pump housing (5) in such a way that air which is expelled from the working spaces (7) is conducted into an interior space (22), surrounding the crank drive, of the pump housing (5), and that an air outlet unit (13) is provided which permits low-noise expulsion of the air from the interior space (22) by deflecting the air, **characterized in that** the eccentrics (9) each have an unbalance weight (25) which is provided integrally molded onto the eccentric (9).

2. Motor-pump assembly according to Claim 1, **characterized in that** the eccentrics (9) with the unbalance weights (25) are provided as sintered components.

3. Motor-pump assembly according to Claim 1 or 2, **characterized in that** the connecting rods (10) are provided as sintered components.

4. Motor-pump assembly according to Claim 1 or 2, **characterized in that** a connecting eyelet (26) of the connecting rods (10) is provided as a sintered component, and a connecting rod shank (27) made of plastic is provided.

5. Motor-pump assembly according to Claim 4, **characterized in that** the attachment of the connecting rod shank (27) to the connecting eyelet (26) is provided by encapsulation of an extension (28) of the connecting eyelet (26) by injection molding.

6. Motor-pump assembly according to one of the preceding claims, **characterized in that** the working diaphragms (4) are attached to the connecting rods (10) by friction welding.

## Revendications

1. Groupe motopompe (1), en particulier pour fournir de la pression pour un dispositif d'actionnement de frein d'un système de freinage de véhicule automobile comprenant un servofrein pneumatique, en particulier un servofrein à vide, comportant une pompe (2) et un moteur électrique (3) entraînant la pompe (2), la pompe (2) étant prévue sous forme de pompe à double membrane dotée de deux membranes de travail (4) se faisant face, lesquelles sont respectivement serrées entre un carter de pompe (5) et un couvercle de chambre de travail (6) et délimitent ainsi une chambre de travail (7), et lesquelles peuvent être déplacées au moyen d'un entraînement par manivelle (8) comprenant des excentriques (9) et des bielles (10), un conduit d'admission doté d'une soupape d'admission et un conduit de sortie doté d'une soupape de sortie étant respectivement associés à la chambre de travail (7), les conduits de sortie étant prévus de manière disposée dans les couvercles de chambre de travail (6) et dans le carter de pompe (5) de telle sorte que l'air refoulé hors des chambres de travail (7) soit guidé dans un espace interne (22) du carter de pompe (5) entourant l'entraînement par manivelle, et qu'une unité de sortie d'air (13) soit prévue, laquelle permet un soufflage silencieux de l'air hors de l'espace interne (22) par déviation de l'air, **caractérisé en ce que** les excentriques (9) comprennent respectivement une masse d'équilibrage (25) qui est prévue de manière formée d'une seule pièce sur les excentriques (9).

2. Groupe motopompe selon la revendication 1, **caractérisé en ce que** les excentriques (9) dotés des masses d'équilibrage (25) sont prévus sous forme de composants frittés.

3. Groupe motopompe selon la revendication 1 ou 2, **caractérisé en ce que** les bielles (10) sont prévues sous forme de composants frittés.

4. Groupe motopompe selon la revendication 1 ou 2, **caractérisé en ce qu**'une tête de bielle (26) des bielles (10) est prévue sous forme de composant fritté et un corps de bielle (27) en matière plastique est prévu.

5. Groupe motopompe selon la revendication 4, **caractérisé en ce que** la fixation du corps de bielle (27) à la tête de bielle (26) est prévue par surmoulage d'un prolongement (28) de la tête de bielle (26).

6. Groupe motopompe selon l'une quelconque des revendications précédentes, **caractérisé en ce que** les membranes de travail (4) sont fixées aux bielles (10) par soudage par friction.
